# EUROPEAN PATENT APPLICATION

(11) **EP 2 030 783 A1**
(43) Date of publication of application: **04.03.2009**
(21) Application number: 08388027.8
(22) Date of filing: 28.08.2008
(51) Int. Cl.: B32B 27/30

(54) **Packaging film inculding polyvinyl alcohol layer**

(30) Priority: 03.09.2007 DK 200700232 U; 07.04.2008 DK 200800505
(71) Applicant: Danapak Flexibles A/S, 4200 Slagelse (DK)
(72) Inventor: Schmidt, Palle, 4200 Slagelse (DK); Johansen, Peter, 4200 Slagelse (DK); Christensen, Lars Christian, 4200 Slagelse (DK)
(74) Representative: Poulsen, Carsten Stechnik

(57) **Abstract**

According to the invention, a gas-tight packaging film may be produced in the form of a laminate, where a base layer (3) has applied to it an aqueous layer containing polyvinyl alcohol (PVOH), which forms a barrier layer (1) after drying, following which printing (2) is carried out, and finally a further base layer (4) is applied to protect the print and the barrier layer.

This film may be produced to be transparent, as the barrier layer (1) is relatively thin and therefore transparent.

## Description

The invention relates to a method of making a packaging film comprising a base layer which is provided with a barrier layer and has printing ink applied to it in a printing operation.

The invention moreover relates to a means for performing the method as well as use thereof.

### The prior art

Packaging films for the packaging of food products must comprise a barrier layer to protect the packaged food product against inflow and outflow of gasses.

The use of such gas-tight packages also extends to many other products, such as medical preparations, sterile articles, etc.

For such films to be used for products intended for consumption, it is important that they are transparent, which means that also the barrier layer must be transparent.

US 6,426,135 B1 discloses an example of such a film, where the barrier layer is formed by a thin layer of dried polyvinyl alcohol (PVOH), which is applied to one of the base layers.

This laminate is produced in a generally known manner by extrusion/lamination, and the barrier layer simultaneously constitutes a thin layer of polyvinyl alcohol, which constitutes the gas-tight barrier layer after drying.

This known method is not suitable for the production of packaging films in great amounts, since the method comprises various steps, such as printing and application in various, separate, working processes. As a result, the package is expensive and is not suitable for mass production.

### The object of the invention

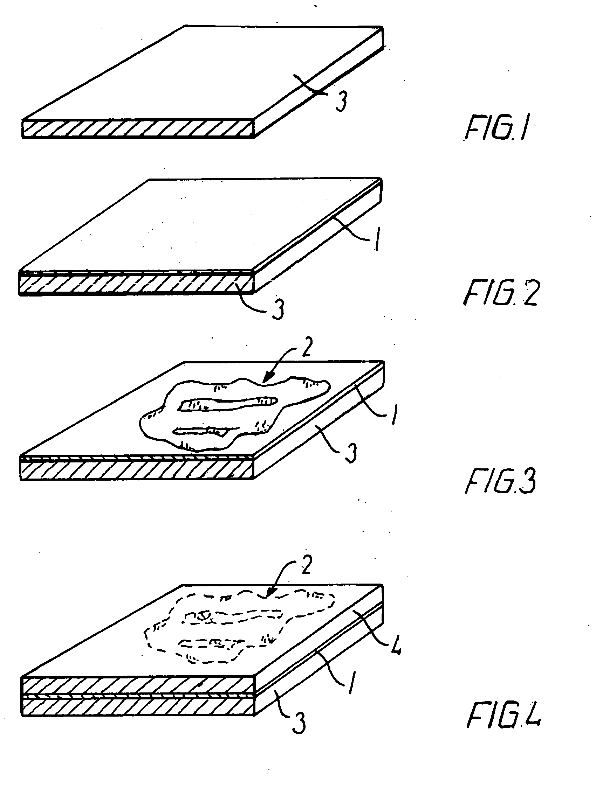

It is the object of the invention to remedy this defect of known gas-tight films, and this is achieved according to the invention by a method in which an aqueous dispersion of polyvinyl alcohol (PVOH) is first applied to the base layer, which dispersion is dried, following which a print is applied, and then a further, preferably transparent base film layer is applied to form a finished laminate (fig. 4).

In this surprisingly simple manner, a working process is achieved, whereby a laminate may be produced with an embedded barrier layer, while the printed layer is in a confined position in the laminate, where it is protected by a base film which serves as a cover layer.

Hereby, the print is joined with the barrier layer directly between two outer base films, which impart strength, tear resistance, and which protect the barrier layer as well as the print layer against external impacts.

When, as stated in claim 2, this method is carried out in a continuous working process, security is achieved in terms of gas tightness as well as other physical properties, since the vulnerable layers are in a confined position between the base layers.

When, as stated in claim 3, an aqueous dispersion is used for forming a layer of between 75 and 250 nm, the layer may be dimensioned for any gas tightness need that occurs in practice, without the transparent properties being lost.

Finally, it is expedient, as stated in claim 5, to use this film as a packaging film for food products in particular.

### The drawing

An example of a method of making a film according to the invention will be explained more fully below with reference to the drawing, in which
- fig. 1: shows the base layer as a starting point for the method,
- fig. 2: shows a base layer having a barrier layer applied to it,
- fig. 3: shows a print on this base layer, and
- fig. 4: shows a further base layer thereon.

### Description of an exemplary embodiment

The invention relates to a method of making a film laminate in one working process, i.e. a barrier layer with an applied print is applied, following which a cover layer is arranged, so that the entire working operation may be carried out continuously for the making of a transparent, gas-tight packaging film, which is also provided with a print.

This method is illustrated in the drawing, where fig. 1 indicates a base layer 3, which is a film of preferably biaxially oriented polypropylene (OPP), polyester (PET), biaxially oriented nylon (OPA) and similar films.

Then, the barrier layer 1 itself is applied, as indicated in fig. 3. This layer 1 is applied in the form of an aqueous dispersion of polyvinyl alcohol (PVOH), which is preferably applied in an applicator in such a manner as will ensure an uninterrupted and uniform layer. When this layer has been applied, it must be dried, preferably by the supply of heat, for the drying to take place under controlled conditions.

The advantages of this application of the barrier layer is that it is applied so early in the process that the base layer 3 with print 2 is still quite plane and smooth. This gives the best possible distribution of the aqueous dispersion.

The amount of dry matter in the finished layer is preferably of the order of between 0.1 and 0.3 g/m². This corresponds to a layer thickness of between 75 and 250 nm.

The surface of the base layers 2, 3 must be prepared in a generally known manner to ensure the adhesion of the barrier layer 1.

In an intaglio printing process, which comprises a so-called in-line printing process, the desired print 2 is applied, as indicated in fig. 2.

Then, as indicated in fig. 4, a further base layer 4 is applied in the form of a generally known film material, such as biaxially oriented polypropylene (OPP), moulded polypropylene (CPP), polyethylene (PE) and the like.

It is likewise important to prepare the adhesion side of the layer 4 owing to the adhesion and thereby the strength of the finished laminate.

The first base layer 3 will normally constitute the outer side of the film, while the second base layer 4 will constitute the internal side of the packaging film.

In addition to food products, the gas-tight film may be used for modified atmosphere packages (MAP) and other controlled atmosphere packages (CAP).

In addition to manufacture in an intaglio printing tool by a printing process, the film may be manufactured in a liquid distribution machine combined with an intaglio printing tool.

The method ensures a totally uniform, gas-tight product, which is relatively inexpensive to produce because of the effective production process.

## Claims

1. A method of making a packaging film comprising a base layer which is provided with a barrier layer (1) and has printing ink applied to it in a printing operation, **characterized in that** an aqueous dispersion (1) of polyvinyl alcohol (PVOH) is first applied to the base layer (3), which dispersion is dried, following which a print (2) is applied, and then a further, preferably transparent base film layer (4) is applied to form a finished laminate (fig. 4).

2. A method according to claim 1, **characterized in that** the method is carried out in one working operation.

3. A means for performing the method according to claim 2, **characterized in that** the aqueous dispersion (1) is applied in a layer thickness of between 75 and 250 nm, corresponding to a dry matter content of between 0.1 and 0.3 g/m².

4. Use of the film produced in claim 1 for the packaging of food products and the like in a gas-tight package.

5. Use according to claim 4, **characterized in that** the first base layer (3) constitutes the outer side and the second base layer (4) the inner side of the finished laminate.
